# EUROPÄISCHE PATENTANMELDUNG

(11) **EP 1 544 416 A2**
(43) Veröffentlichungstag der Anmeldung: **22.06.2005**
(21) Anmeldenummer: 04028512.4
(22) Anmeldetag: 02.12.2004
(51) Int. Cl.: F01D 25/16, F02C 7/06

(54) **Lagerung des Rotors einer Gasturbine**

(30) Priorität: 15.12.2003 DE 10358953
(71) Anmelder: MAN TURBO AG, 46145 Oberhausen (DE)
(72) Erfinder: Aschenbruck, Emil, 46167 Duisburg (DE); Kleinefeldt, Andreas, 40880 Ratingen (DE); Blaswich, Michael, 46045 Oberhausen (DE); Orth, Ulrich Dr., 46242 Bottrop (DE)
(74) Vertreter: Radünz, Ingo, Dipl.-Ing.

(57) **Zusammenfassung**

Der Rotor (5) einer einen Verdichterteil (1) und einen Turbinenteil (3) enthaltenen Gasturbine ist in einem axialen Drucklager (19) und in zwei radialen Traglagern (16, 17) gelagert. Das eine Traglager (16) ist im Eintrittsbereich des Verdichterteiles (1) und das andere Traglager (17) ist zusammen mit dem Drucklager (19) im Bereich des Turbinenteiles (3) angeordnet.

## Beschreibung

Die Erfindung betrifft die Anordnung zur Lagerung des Rotors einer Gasturbine mit den Merkmalen des Oberbegriffes des Patentanspruches.

In bekannten Gasturbinenanlagen (Ch. Lechner/J. Seume, Stationäre Gasturbinen, Springer-Verlag, 2003, Seiten 720-723) ist das Drucklager zur axialen Festlegung des Rotors im Eintrittsbereich des Verdichterteiles angeordnet. Diese Anordnung wurde stets gewählt, weil der Platzbedarf im Eintrittsbereich des Verdichterteiles verhältnismäßig günstig und dort das Drucklager verhältnismäßig einfach zugänglich ist. Da das Drucklager im Vergleich zu dem radialen Traglager bedeutend mehr Öl benötigt, lassen sich die Ölzufuhr- und die Ölablaufleitungen im Eintrittsbereich des Verdichterteiles verhältnismäßig einfach unterbringen.

Während des Betriebes der Gasturbine kommt es zu einer Erwärmung der Bauteile. Die unterschiedliche Erwärmung der Bauteile führt zu axialen Relativverschiebungen zwischen den Rotorkomponenten und den Statorkomponenten der Gasturbine. Die axialen Relativverschiebungen wachsen mit dem Abstand des Turbinenbauteiles vom Drucklager und führen bei deckbandlosen und konischen Schaufeln zu einer Vergrößerung des Spieles zwischen Laufschaufel und Statorwand während des Überganges vom Ruhezustand in den Betriebszustand der Gasturbine.

Der Erfindung liegt die Aufgabe zugrunde, die gattungsgemäße Lagerung eines Turbinenrotors so zu gestalten, dass die Relativdehnungen zwischen dem Turbinenrotor und dem Turbinenstator verringert und dass damit die Spalte zwischen diesen Teilen verkleinert werden können.

Die Aufgabe wird bei einer gattungsgemäßen Lagerung erfindungsgemäß durch das kennzeichnende Merkmal des Patentanspruchs gelöst.

Vorteilhafte Ausgestaltungen der Erfindung sind in den Unteransprüchen angegeben.

Obwohl bisher gute Gründe dafür sprachen, das Drucklager in dem Eintrittsbereich des Verdichterteiles der Gasturbine anzuordnen, wurde unter dem Gesichtspunkt eines Wirkungsgradgewinnes erfindungsgemäß das Drucklager in den Bereich des Turbinenteiles verlegt.

Durch das turbinenseitig angeordnete Drucklager werden die Axialdehnungen des Turbinenteiles minimiert. Dadurch wird das Spiel verringert, das sich während des Überganges von dem Ruhezustand in den Betriebszustand zwischen den Laüfschaufeln und der Statorwand einstellt. Das verringerte Spiel führt zu einer Verringerung der Strömungsverluste und damit zu einer Erhöhung des Wirkungsgrades.

Gleichzeitig kann die für das Drucklager erforderliche höhere Ölmenge in dem heißen Bereich des Turbinenteiles für eine intensivere Kühlung des Lagergehäuses genutzt werden. Eine solche intensivere Kühlung des Lagergehäuses trägt mit dazu bei, der Forderung nach erhöhten Turbineneintrittstemperaturen entgegenzukommen.

Das Drucklager und das Traglager im Bereich des Turbinenteils können grundsätzlich separat ausgeführt werden. Vorteilhaft ist jedoch auch, wenn das Traglager und das Drucklager zusammen im Bereich des Turbinenteiles angeordnet sind.

Als Lager sind vorzugsweise Kippsegmentlager oder auch Gleitflächenläger vorgesehen. Weiterhin können vorteilhafterweise schmierlose Lager wie Magnetlager angeordnet werden. Für besondere Anordnungen können die Traglager als Gleitflächenlager ausgeführt sein, während das Drucklager als Kippsegmentlager ausgebildet ist.

Ein Ausführungsbeispiel der Erfindung ist in der Zeichnung dargestellt und wird im Folgenden näher erläutert. Es zeigen:

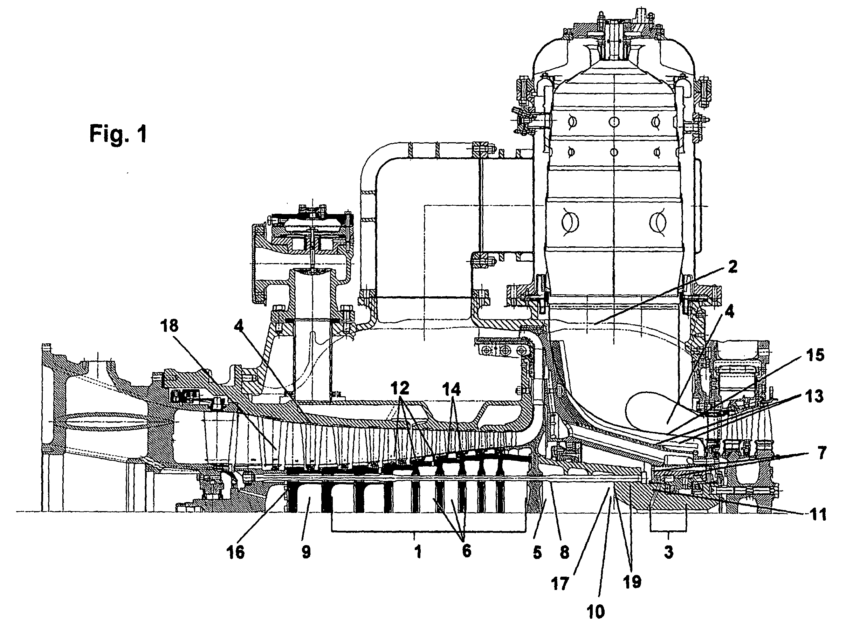

Fig. 1 einen halben Längsschnitt durch eine Gasturbine,
Fig. 2 als Detail die Lageranordnung auf der Turbinenseite,
Fig. 3a eine Laufschaufel im Ruhezustand der Turbine und
Fig. 3b die Laufschaufel im Betriebszustand der Turbine.

Die Gasturbine besteht aus einem Verdichterteil 1, einer Brennkammer 2 und einem Turbinenteil 3. Innerhalb eines Turbinengehäuses 4 läuft ein Rotor 5 um, der im Verdichterteil 1 und im Turbinenteil 3 aus Scheiben 6, 7 aufgebaut ist. Die Scheiben 6 des Verdichterteiles 1 sind durch Bolzen 8 miteinander sowie mit einem Endteil 9 und mit einem Rotormittelteil 10 verbunden. Die Scheiben 7 des Turbinenteiles 3 sind ebenfalls durch die Scheiben durchdringende Bolzen 11 miteinander und mit dem Rotormittelteil 10 verbunden. Auf ihrem Umfang tragen die Scheiben 6, 7 Laufschaufeln 12, 13. Zwischen den Laufschaufeln 12, 13 sind Leitschaufeln 14, 15 angeordnet, die an der Wand des Turbinengehäuses 4 befestigt sind.

Der Rotor 5 ist in zwei radialen Traglagern 16, 17 gelagert. Das eine Traglager 16 ist im Eintrittsbereich des Verdichterteiles 1 angeordnet und umgibt das Endteil 9 des Rotors 5, während das andere Traglager 17 im Bereich des Turbinenteiles 3 vorgesehen ist und das Rotormittelteil 10 umgibt. Im Bereich des Turbinenteiles 3 ist weiterhin ein Drucklager 19 angeordnet, das die Axialbelastung des Rotors 5 auffängt. Die Lager werden mit Schmieröl versorgt, das über ölführende Bohrungen sowie Ölzufuhr- und Ölablaufleitungen von der Seite des Turbinenteiles 3 her bereitgestellt wird. Das Schmieröl sorgt gleichzeitig für eine intensive Kühlung der Lageranordnung.

Die Lageranordnung enthält vorzugsweise Kippsegmentlager. Es können aber auch Mehrflächengleitlager, Wälzlager, Magnetlager oder andere Lagertypen verwendet werden.

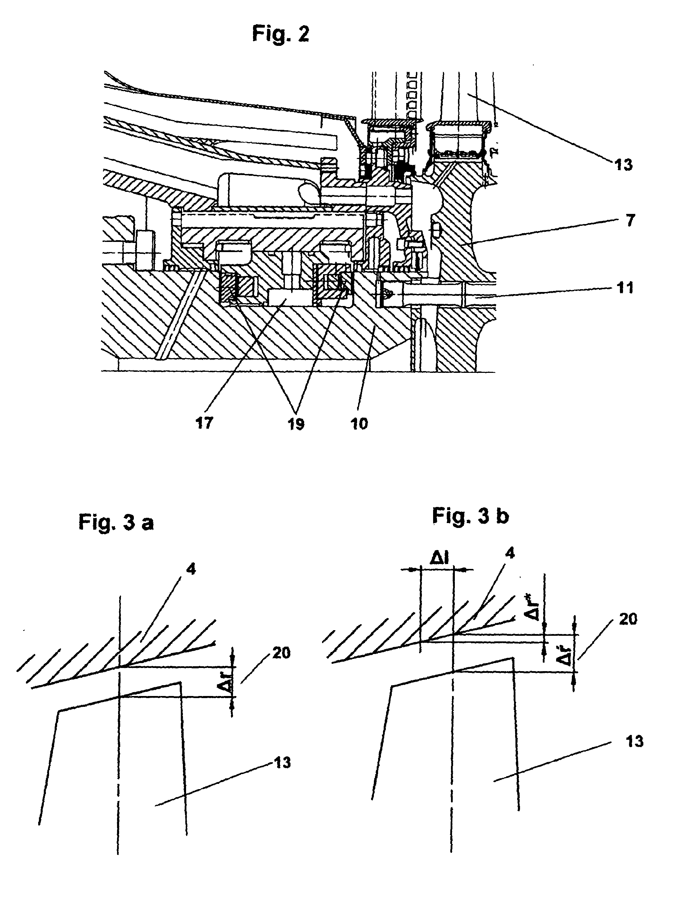

Dadurch, dass das Drucklager 19 abweichend von der bisherigen Bauweise im Bereich des heißen Turbinenteiles 3 angeordnet ist, wird die thermisch bedingte axiale Längendehnung des Rotors 5 im Turbinenbereich eingeschränkt. Welchen Vorteil das mit sich bringt, ist schematisch in den Fig. 3a und 3b verdeutlicht. Die Laufschaufeln 13 des Turbinenteiles 3 sind konisch und ohne äußeres Deckband ausgeführt. Zwischen den Spitzen der rotierenden Laufschaufeln 13 und der Wand des feststehenden Turbinengehäuses 4 besteht im Ruhezustand der Gasturbine ein Spiel 20 von vorgegebener Größe Δr (Fig. 3a). Wird die Gasturbine aus dem Ruhezustand in den Betriebszustand (Fig. 3b) versetzt, so erfährt der Rotor 5 aufgrund der Temperaturbelastung eine thermische Längendehnung Δl in axialer Richtung.

Ist - wie vorgesehen - das Drucklager 19 auf der dem Verdichterteil 1 zugewandten Seite des Turbinenteiles 3 angeordnet, so führt bei konischen Laufschaufeln 13 die axiale Längendehnung Δl zu einer Vergrößerung des Spieles 20 um den Wert Δr* auf den Wert Δr'. Eine solche Vergrößerung des Spieles 20 führt zu Strömungsverlusten und damit zu einer Verringerung des Wirkungsgrades der Gasturbine. Durch die erfindungsgemäße Anordnung des Drucklagers 19 im Bereich des Turbinenteiles 3 kann die Vergrößerung des Spieles 20 aufgrund der axialen Längendehnung des Rotors 5 in engeren Grenzen gehalten werden, wodurch eine Verbessung des Wirkungsgrades der Gasturbine erreicht wird.

## Patentansprüche

1. Anordnung zur Lagerung des Rotors (5) einer Gasturbine mit einem Verdichterteil (1) und einem Turbinenteil (3), wobei der Rotor (5) in einem axialen Drucklager (19) und in zwei radialen Traglagern (16, 17) gelagert ist, von denen ein Traglager (16) im Eintrittsbereich des Verdichterteiles (1) und das andere Traglager (17) im Bereich des Turbinenteiles (3) angeordnet ist, **dadurch gekennzeichnet, dass** das Drucklager (19) im Bereich des Turbinenteiles (3) angeordnet ist.

2. Anordnung zur Lagerung eines Rotors (5') einer Gasturbine nach Anspruch 1, **dadurch gekennzeichnet, dass** das Drucklager (19) im Bereich des Turbinenteiles (3) zusammen mit dem Traglager (17) angeordnet ist.

3. Anordnung zur Lagerung eines Rotors (5) einer Gasturbine nach Anspruch 1, **dadurch gekennzeichnet, dass** als Lager (16, 17, 19) Kippsegementlager angeordnet sind.

4. Anordnung zur Lagerung eines Rotors (5) einer Gasturbine nach Anspruch 1, **dadurch gekennzeichnet, dass** als Lager (16, 17, 19) Gleitflächenlager angeordnet sind.

5. Anordnung zur Lagerung eines Rotors (5) einer Gasturbine nach Anspruch 1, **dadurch gekennzeichnet, dass** als Lager (16, 17, 19) Magnetlager verwendet werden.

6. Anordnung zur Lagerung eines Rotors (5) einer Gasturbine nach Anspruch 1, **dadurch gekennzeichnet, dass** als Traglager (16, 17) Gleitflächenlager angeordnet sind und als Drucklager ein Kippsegmentlager vorgesehen ist.
